(19) **Europäisches Patentamt European Patent Office Office européen des brevets**

(11) **EP 4 716 177 A1**

(12) **EUROPEAN PATENT APPLICATION**

(43) Date of publication:
25.03.2026 Bulletin 2026/13

(21) Application number: 24201974.3

(22) Date of filing: 23.09.2024

(51) International Patent Classification (IPC):
H04L 47/10 (2022.01)       H04L 47/2416 (2022.01)

(52) Cooperative Patent Classification (CPC):
H04L 47/10; H04L 47/2416; H04L 47/25

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: **Deutsche Telekom AG**
**53113 Bonn (DE)**

(72) Inventor: **SCHNIEDERS, Dominik**
**52078 Aachen (DE)**

(74) Representative: **RDL Patentanwälte PartG mbB**
**Senefelderstrasse 26**
**70176 Stuttgart (DE)**

(54) **OPERATION OF A SCHEDULER OF AN ACCESS POINT OF A RAN BURSTS OF DATA PACKETS TRANSMITTED BY A REAL-TIME APPLICATION**

(57)     A method for operating an access point of a radio access network, RAN, wherein an access point of a RAN forwards data packets transmitted by a real-time application via a wireless connection provided by the access point; a scheduler of the access point, in a current mode of the scheduler, continuously determines a best effort bitrate for the wireless connection and a target bitrate for the distributed real-time application dependent on the best effort bitrate, the best effort bitrate being based on a fair allocation of spectral resources of the access point and on radio conditions of the wireless connection, and signals the determined target bitrate to the distributed real-time application; the distributed real-time application dynamically adjusts a data rate of the transmitted data packets dependent on the signaled target bitrate; an access point for a RAN and a computer program product.

Fig. 1

## EP 4 716 177 A1

**Description**

The invention relates to a method for operating an access point of a radio access network, RAN, wherein an access point of a RAN forwards data packets transmitted by a real-time application via a wireless connection provided by the access point; a scheduler of the access point, in a current mode of the scheduler, continuously determines a best effort bitrate for the wireless connection and a target bitrate for the distributed real-time application dependent on the best effort bitrate and signals the determined target bitrate to the distributed real-time application, the best effort bitrate being based on a fair allocation of spectral resources of the access point and on radio conditions of the wireless connection; the distributed real-time application dynamically adjusts a data rate of the transmitted data packets dependent on the signaled target bitrate. The invention further relates to an access point for a RAN and to a computer program product.

Methods of the above-mentioned kind are known in the art and are used to provide distributed real-time applications with a low and a stable latency of the wireless connection, the stability of the latency corresponding to a low volatility of the latency wherein the volatility of the latency is referred to as a jitter. The latency generally indicates an unavoidable transmission delay related to the wireless connection.

For instance, the scheduler may signal the target bitrate indirectly by applying a low latency low loss scalable throughput, L4S, algorithm to the queue. The L4S algorithm is specified by RFC 9330 and uses an explicit congestion notification, ECN, protocol exploiting bits of an internet protocol, IP, header of the data packets for signaling a filling level of the queue. In greater detail, the sender of the distributed real-time application transmits the data packets via the wireless connection at the data rate, the data rate immediately depending on a size and an incidence, i.e. frequency of the transmitted data packets. The scheduler provides a percentage of the transmitted data packets with a mark, the percentage indicating the filling level of the queue. The receiver of the distributed real-time application receives the transmitted data packets, measures the percentage of received marked data packets and causes the sender to reduce the data rate until no more marked data packets or at least less than a tolerable percentage of marked data packets are received. Alternatively the target bitrate may be signaled directly via an application programming interface, API, of the distributed real-time application.

The best effort bitrate takes into account competing distributed applications connected to the access node and simultaneously transmitting data packets via respective wireless connections. The determined best effort bitrate allows for a fair distribution of available spectral resources of the access point among all competing distributed applications, i.e., a fair distribution of a total spectral capacity of the access point.

A distributed real-time application comprises a sender executed by a first node and a receiver executed by a second node remote from the first node, the sender and the receiver transmitting data packets via the wireless connection. Alternatively, the first node may execute the receiver while the second node may execute the sender. Of course, the first node and the second node may also alternate in executing the sender and the receiver, respectively, during execution of the distributed application.

Distributed real-time applications which, herein, also include near-real-time applications usually require a low and stable latency in order to work properly. Remote, i.e., teleoperated driving, online cloud gaming, video calling and real-time augmented reality, AR, streaming are exemplary distributed real-time applications.

However, while the known methods perfectly support distributed real-time applications providing a constant or an at least substantially constant data rate, the known methods fail in sufficiently supporting distributed real-time applications providing a data rate having sudden strong variations, i.e., including so-called data bursts. For instance, a video stream transmitted by a distributed real-time application as a sequence of data packets comprises a plurality of successive video frames some of which, so-called i-frames, comprise substantially more data than the video frames in between.

Moreover, a network node involved in the transmission of the data packets may cause data bursts even for a distributed real-time application initially providing a constant or an at least substantially constant data rate. For instance, the network device may be blocked and, hence, temporarily queue the transmitted data packets and rapidly forward the queued data packets in a go as soon as the blocking ends.

A data burst causes the scheduler to detect a strong congestion of the queue and signal a lower target bitrate. Consequently, the distributed real-time application strongly lowers a data rate of the transmitted data packets in response. After the strong congestion has disappeared the scheduler signals the distributed real-time application an increasing target bitrate causing the distributed real-time application to increase the data rate correspondingly in response. As a result, a timely variation of the data rate will have a saw tooth shape which adversely affects not only the execution of the distributed real-time applications but also the execution of a competing distributed application.

It is an object of the invention to suggest a method for operating a scheduler of an access point of a RAN which allows for fairly, efficiently and sufficiently scheduling data bursts of data packets transmitted by a distributed real-time application via a wireless connection provided by the access point comprising the scheduler. Other objects of the invention are providing an access point for a RAN and a computer program product.

A first aspect of the invention is a method for operating an access point of a radio access network, RAN, wherein an access point of a RAN forwards data packets transmitted by a real-time application via a wireless connection provided by the access point; a scheduler of the access point, in a normal mode of the scheduler, continuously determines a best effort bitrate for the wireless connection and a target bitrate for the distributed real-time application dependent on the best effort bitrate, the best effort bitrate being based on a fair allocation of spectral resources of the access point and on radio conditions of the wireless connection, and signals the determined target bitrate to the distributed real-time application; and the distributed real-time application dynamically adjusts a data rate of the transmitted data packets dependent on the signaled target bitrate. The scheduler and the distributed real-time application effectively cooperate in order to minimize a latency and a jitter of the wireless connection. For instance, the cooperation may involve the above-mentioned L4S algorithm. However, the cooperation may also comprise different, particularly more sophisticated algorithms.

According to the invention, the scheduler continuously measures a current data rate of the transmitted data packets and determines a current change rate of the measured current data rate, and the scheduler switches from the normal mode to a burst mode of the scheduler when the scheduler, in the normal mode, derives a start of a data burst of the transmitted data packets from the determined current change rate, and, in the burst mode, the scheduler determines the target bitrate ignoring the best effort bitrate. In other words, the scheduler does not signal a congestion of the queue to the distributed real-time application, the congestion resulting from the data burst. Accordingly, the distributed real-time application is not caused to adjust the data rate. As a result, a saw tooth shape of the data rate is effectively avoided.

However, competing distributed applications may be adversely affected by the scheduler. As the data burst is defined to be a temporary event having a relatively short duration, e.g., few milliseconds, the adverse affection of the competing applications also is temporary and has a relatively short duration. Nonetheless, the data rate provided by the distributed real-time application exceeds the best effort bitrate resulting in a temporary unfair distribution of the total spectral capacity of the access point.

The current data rate may be measured using a sliding window, a width of the sliding window being determined by the scheduler. The width of the sliding window is preferably chosen to be sufficiently small for detecting the data burst, e.g., to be in a range from 10 ms to 100 ms. The current data rate may be measured periodically, e.g., each millisecond, each measurement being based on the sliding window immediately preceding the measurement. The data rate may be determined according to:

$$datarate(t) = \frac{1}{width} \cdot \int_{t-width}^{t} \big( packetincidence(t) \cdot packetdata(t) \big)\, dt,$$

wherein the packet incidence (t) is a time distribution of the transmitted data packets and packet data (t) is a size of a respective transmitted data packet.

The change rate shall be understood as a mathematical slope of the data rate and, hence, may be obtained as a first derivative of the data rate, i.e., according to

$$changerate(t) = \frac{d}{dt} datarate(t).$$

The scheduler preferably derives the start of the data burst when the determined current change rate exceeds a predetermined positive high threshold rate. The positive high threshold rate restricts each derived start of a data burst to a sudden and strong increase of the data rate, i.e.,

$$changerate(t) \gg 0.$$

Advantageously, the scheduler, in the burst mode, constantly signals the target bitrate determined latest before switching to the burst mode. As a consequence, the data rate of the distributed real-time application during the burst is compatible with the best effort bitrate immediately before the burst.

In an embodiment, the scheduler switches from the burst mode to the normal mode when the scheduler, in the burst mode, derives an end of the data burst from the measured current data rate. Switching back to the normal mode after the data burst reflects the temporary character of the data burst.

The scheduler may derive the end of the data burst when a measured burst duration is shorter than a determined burst duration threshold and the determined current change rate falls below a predetermined negative low threshold rate or when a measured burst duration at least equals a determined burst duration threshold. The negative low threshold rate restricts each derived early end of a data burst to a strong decrease of the data rate, i.e.,

$$currentchangerate \ll 0.$$

The burst duration threshold enforces the end of the burst mode in case the change rate does not decrease within a reasonable time interval, the reasonable time interval defined by the burst duration threshold. In this way, a long lasting unfair distribution of the total spectral capacity of the access point is certainly prevented.

In an embodiment, the scheduler determines the burst duration threshold to be a small integer multiple of an averaged packet transmission duration of historic data packets. The burst duration threshold reflects a historic behavior of the distributed real-time application and is determined according to

$$burst duration threshold = n \cdot \Delta t,$$

wherein n is a small integer preferably chosen in range from 1 to 5, e.g., chosen to be 3 and $\Delta t$ is a typical duration of a data packet transmitted by the distributed real-time application. For instance, a frame rate of a video stream may be 60/s. Accordingly, an averaged packet transmission duration is about 16ms. The factor n=3 adequately takes into account the elongated transmission of i-frames of the video stream resulting in a burst duration threshold of 48ms.

The scheduler measures the burst duration by starting a timer when the scheduler switches to the burst mode and, in the burst mode, continuously evaluating the timer and stopping the timer when the scheduler switches to the normal mode. The timer allows the scheduler in the burst mode for deciding when to switch, i.e., return to the normal mode after the derived start of the data burst.

The scheduler, in the normal mode, may switch to a stability state of the normal mode when the determined current change rate exceeds a predetermined negative high threshold rate or falls below a predetermined positive low threshold rate. In the normal mode, the scheduler may have different states, one of which being the stability state, and switching from one state to another state. The stability state is defined by an absolute value of the current change rate being small, i.e.,

$$negative high threshold rate < current change rate < positive low threshold rate,$$

wherein the negative high threshold rate is close to zero and, herein, still referred to as 'high' as negative threshold rates more distant from zero are lower with respect to a number ray of numbers. In the stability state, the data rate only varies very slightly.

The scheduler may switch to a growth state of the normal mode when, in the normal mode, the determined current change rate exceeds the predetermined positive low threshold rate or when, in the burst mode, a measured burst duration at least equals a determined burst duration threshold. The stability state is defined by

$$positive low threshold rate < current change rate < positive high threshold rate,$$

the upper limit indicating the current change rate causing the scheduler to switch to the burst mode. The growth state may follow a previous burst mode.

The scheduler may switch to a decay state of the normal mode when, in the normal mode, the determined current change rate decreases below a predetermined negative high threshold or when, in the burst mode, a measured burst duration is shorter than a determined burst duration threshold and the measured data rate falls below the best effort bitrate. The decay state is defined by

$$current change rate < negative high threshold rate.$$

The decay state may follow a previous burst mode.

Favorably, the scheduler, after the data burst, switches to a compensation mode of the scheduler, and, in the compensation mode, determines the target bitrate lower than in the normal mode and, in the compensation mode, switches to the normal mode when a measured amount of data forwarded to a lesser extent during the compensation mode compensates an amount of data forwarded excessively during the burst mode. The compensation mode retroactively restores the fair distribution of the spectral capacity of the access node temporarily allowing the competing distributed applications data rates above the respective best effort bitrates.

In a preferred embodiment, the scheduler determines the target bitrate as an output bitrate of a virtual queue defined by the scheduler. The virtual queue is different from a real queue monitored by the scheduler. However, as opposed to the real queue, the scheduler may readily change parameters, e.g., the output bitrate, of the virtual queue in order to simultaneously optimize a usage of the total spectral capacity of the access node and a fairness of a distribution of the total spectral capacity of the access node among competing distributed applications.

The distributed real-time application preferably adjusts the data rate of the transmitted data packets below the signaled target bitrate. Adjusting the data rate below the signaled target bitrate effectively allows the distributed application for effectively counteracting a congestion of the real queue.

The scheduler may determine the target bitrate at an offset above the best effort bitrate, measures a time average of a deviation of the adjusted data rate from the determined best effort bitrate and dynamically adjusts the offset dependent on the measured time-averaged deviation gradually reducing the measured time-averaged deviation at least substantially to zero. The offset provides a headroom which may be gradually reduced in order to cause the distributed real-time application to adjust the data rate always close to the best effort bitrate.

Additionally or alternatively, the scheduler may assign a priority to the transmitted data packets, allocates spectral resources to the wireless connection corresponding to the assigned priority and determines a priority bitrate dependent on the allocated spectral resources and on radio conditions of the wireless connection and an initial offset when the distributed real-time application starts, the initial offset being calculated as a percentage of an excess of the determined priority bitrate over the determined best effort bitrate to result in an initially negative time-averaged deviation. The initial offset is derived from the priority bitrate and causes the data rate to approach the best effort bitrate from below.

A second aspect of the invention is an access point for a radio access network, RAN, comprising a computing device. The computing device of the access point is configured for creating a radio cell surrounding an antenna connected to the access point.

According to the invention, the computing device is configured for carrying out a method according to an embodiment of the invention as the scheduler. The access point comprises a scheduler configured for fairly, efficiently and sufficiently scheduling data bursts of data packets transmitted by a distributed real-time application via a wireless connection provided by the access point. The access point may be configured as a base transceiver station, BTS, of a cellular network or as a wide area local network, WLAN, access point of a WLAN.

A third aspect of the invention is a computer program product, comprising a digital storage medium storing a program code. The digital storage medium comprises a compact disk, CD, a digital versatile disk, DVD, a hard disk, HD, a random access memory, RAM, chip, a universal serial bus, USB, stick, a cloud storage and the like.

According to the invention, the program code causing a computing device to carry out a method according to an embodiment of the invention as the scheduler when being executed by a processor of the computing device. The computing device implements a scheduler of an access point of a RAN. The scheduler is configured for fairly, efficiently and sufficiently scheduling bursts of data packets transmitted by a distributed real-time application via a wireless connection provided by the access point.

An essential advantage of the inventive method is that bursts of data packets transmitted by a distributed real-time application do not or at least substantially not adversely affect a low and stable latency of a wireless connection provided by an access point of a RAN. Another advantage is that the method can be readily combined with any method providing a low and stable latency which is based on a scheduler of the access point signaling a target bitrate to a distributed real-time application and a distributed real-time application capable of dynamically adjusting a data rate of transmitted data packets dependent on a signaled target bitrate.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.

Fig. 1  schematically shows a structural diagram of a radio access network having an access node according to an embodiment of the invention;

Fig. 2  schematically shows a graph displaying a time behavior of relevant rates and a latency of a wireless connection controlled by the scheduler shown in fig. 1 operated in a method according to an embodiment of the invention in an absence of data bursts;

Fig. 3  schematically shows a graph displaying a data rate and a change rate of the data rate of a wireless connection controlled by the scheduler shown in fig. 1 operated in a method according to an embodiment of the invention in a presence of a data burst.

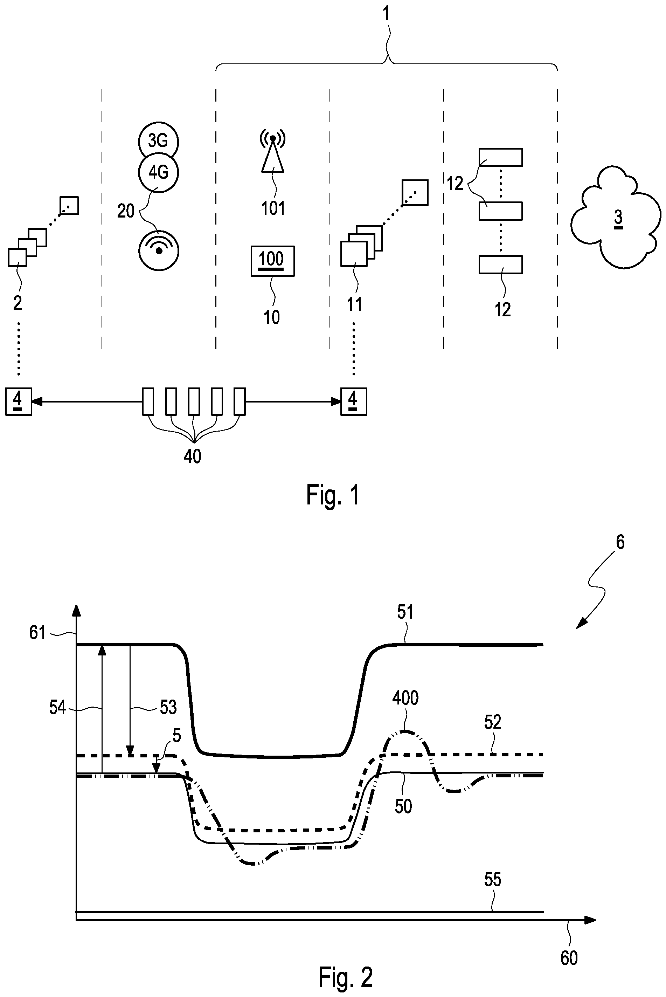

Fig. 1 schematically shows a structural diagram of a radio access network 1 having an access point 10 according to an embodiment of the invention. The radio access network 1 comprises at least one access point 10 and an antenna 101 connected to the access point 10, generally a plurality of access points with respective connected antennas. Exemplarily, the radio access network 1 is configured as a cellular network, and the at least one access point 10 is configured as a base transceiver station, BTS. Alternatively, the radio access network 1 may be configured as a wide local area network, WLAN, and the at least one access point 10 may be a WLAN access point.

The radio access network 1 may further comprise an edge data center 11 adjacent and connected to the at least one access point 10 and a backbone 12 the edge data center 11 is connected to. An internet 3 may be connected to the backbone 12.

At least one terminal device 2, e.g., a smartphone, a tablet, a notebook and the like, generally a plurality of terminal devices 2, may be connected to the at least one access point 10 via a wireless connection 20 provided by the at least one access point 10. The terminal device 2 may comprise a sender of a distributed real-time application 4. The edge data center 11 may comprise a receiver of the distributed real time application 4. Alternatively, the terminal device 2 may comprise the receiver of the distributed real-time application 4, and the edge data center 11 may comprise the sender of the distributed real-time application 4. The sender of the distributed real-time application 4 is configured for transmitting data packets 40 via the wireless connection 20 to the receiver of the distributed real-time application 4.

The at least one access point 10 comprises a scheduler 100. More precisely, the at least one access point 10 comprises a computing device configured for carrying out a method according to an embodiment of the invention as the scheduler 100. The computing device may be configured by means of a computer program product comprising a digital storage medium storing a program code. The program code causes a computing device to carry out the inventive method described below as the scheduler 100 when being executed by a processor of the computing device.

The scheduler 100 of the access point 10 of the radio access network, RAN, 1 carries out the following method when being operated.

The access point 10 of the RAN 1 forwards data packets 40 transmitted by the real-time application 4 via a wireless connection 20 provided by the access point 10.

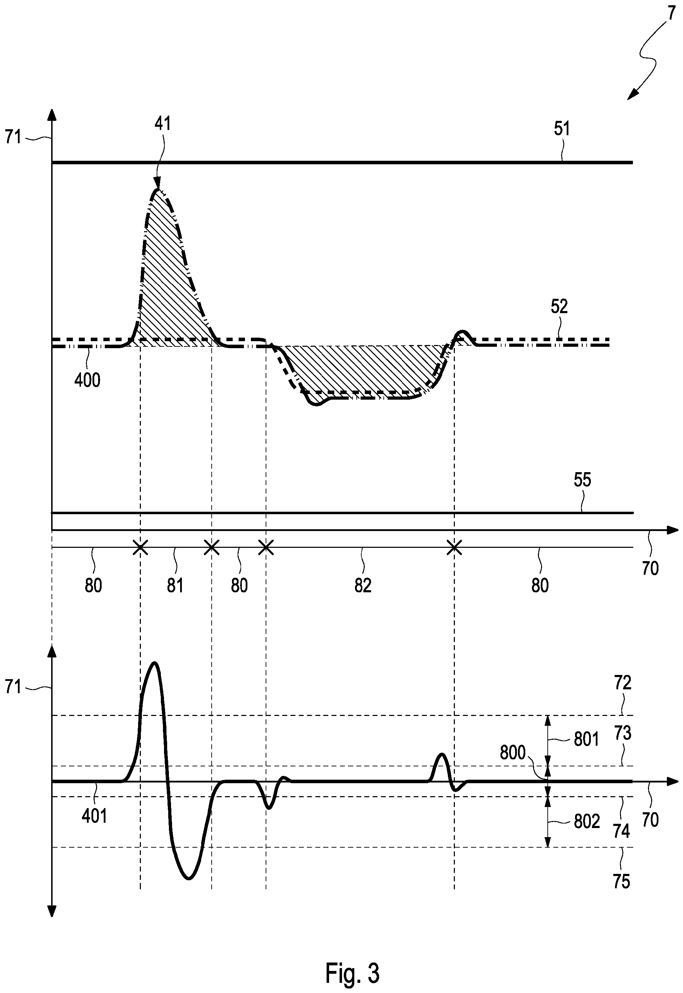

The scheduler 100 of the access point 10, in a normal mode 80 (see fig. 3) of the scheduler 100, continuously determines a current best effort bitrate 50 (see fig. 2) for the wireless connection 20 and a target bitrate 52 (see fig. 2) for the distributed real-time application 4 dependent on the best effort bitrate 50, the best effort bitrate 50 being based on a fair allocation of spectral resources of the access point 10 and on radio conditions of the wireless connection 20, and signals the determined target bitrate 52 to the distributed real-time application 4. The distributed real-time application 4 dynamically adjusts a data rate 400 of the transmitted data packets 40 dependent on the signaled target bitrate 52.

Fig. 2 schematically shows a graph 6 displaying a time behavior of relevant rates, i.e., a data rate 400 of the distributed real-time application 4 and bitrates 50, 51, 52 of the wireless connection 20, and a latency 55 of the wireless connection 20 controlled by the scheduler 100 shown in fig. 1 carrying out a method according to a first embodiment of the invention in an absence of data bursts. An abscissa 60 of the graph 6 indicates a time in seconds. An ordinate 61 of the graph 6 indicates values of both the relevant rates in Megabits per second, Mbps, and the latency 55 of the wireless connection 20 in ms.

The scheduler 100 may determine the target bitrate 52 as an output bitrate of a virtual queue defined by the scheduler 100.

The scheduler 100 particularly determines the target bitrate 52 at an offset 5 above the best effort bitrate 50, measures a time average of a deviation of the adjusted data rate 400 from the determined best effort bitrate 50 and dynamically adjusts the offset 5 dependent on the measured time-averaged deviation gradually reducing the measured time-averaged deviation at least substantially to zero.

The scheduler 100 may further assign a priority to the transmitted data packets 40, allocate spectral resources to the wireless connection 20 corresponding to the assigned priority and determine a priority bitrate 51 dependent on the allocated spectral resources and on radio conditions of the wireless connection 20 and an initial offset 5 when the distributed real-time application 4 starts.

The target bitrate 52 is exemplarily indirectly signaled by applying a low latency low loss scalable throughput, L4S, algorithm to the virtual queue. Alternatively, the target bitrate 52 may be signaled directly via an application programming interface, API, of the distributed real-time application 4.

The scheduler 100 allocates more spectral resources to the wireless connection 20 than fair spectral resources and determines the target bitrate 52 at an offset 5 above a best effort bitrate 50, the best effort bitrate 50 being determined dependent on the fair allocation of spectral resources and on radio conditions of the wireless connection 20. The offset 5 compensates that the distributed real-time application adjusts the data rate 400 below the signaled target bitrate 52 and, thus, supports the distributed real-time application in fully using the best effort bitrate 50.

The scheduler 100 measures a time average of a deviation of the adjusted data rate 400 from the determined best effort bitrate 50.

The scheduler 100 advantageously measures the time-averaged deviation periodically and/or for predetermined finite time intervals. The time-averaged deviation $\delta$ may be measured by integrating a difference of the adjusted data rate 400 from the determined best effort bitrate 50 over a predetermined time interval $T$:

$$\delta = \frac{1}{T} * \int \left( datarate(t) - bitrate_{besteffort}(t) \right) dt$$

The scheduler 100 dynamically adjusts the offset 5 dependent on the measured time-averaged deviation. Particularly, the scheduler 100 gradually reduces the measured time-averaged deviation at least substantially to zero by increasing the offset 5 when the measured time-averaged deviation is negative, and decreases the offset 5 when the time-averaged deviation is positive. The scheduler 100 preferably adjusts the offset 5 faster for a measured time-averaged deviation being absolutely higher, and slower for a measured time-averaged deviation being absolutely lower.

When the distributed real-time application 4 starts, the scheduler 100 may assign a priority to the transmitted data packets 40, allocate spectral resources to the wireless connection 20 corresponding to the assigned priority and determine a priority bitrate 51 dependent on the allocated spectral resources and on radio conditions of the wireless connection 20 and an initial offset 5. The initial offset 5 may be calculated as a percentage of an excess of the determined priority bitrate 51 over the determined best effort bitrate 50 to result in an initially negative time-averaged deviation, e.g., the percentage being in a range from 5% to 10% of the excess. The scheduler 100 may assign an absolute priority or a relative priority to the transmitted data packets 40.

Alternatively, the initial offset 5 may be determined to be a stored averaged offset associated with the distributed real-time application 4.

The scheduler 100 advantageously stores each offset 5 for a storing time, calculates an average of the stored offsets 5 and adjusts the offset 5 faster when a deviation of a current offset 5 from the averaged offset is smaller and adjusts the offset 5 slower when a deviation of a current offset 5 from the averaged offset is bigger.

The scheduler 100 preferably allocates spectral resources allocated to the wireless connection 20 but not used by the distributed real-time application 4 to a different wireless connection 20 provided by the access point 10. The allocated but not used spectral resources correspond to a distributable headroom 53 when the determined best effort bitrate 50 is constant. The distributable headroom 53 may be distributed among competing distributed applications connected to the access point 100 and transmitting data packets via respective wireless connections.

The distributed real-time application 4 preferably adjusts the data rate 400 below the signaled target bitrate 52.

As can be seen from the graph 6, the data rate 400 substantially follows the best effort bitrate 50. When the best effort bitrate 50 is constant the adjusted data rate 400 substantially equals the best effort bitrate 50. When the best effort bitrate 50 varies over time, the adjusted data rate 400 varies with a transient response temporarily differing from the best effort bitrate 50 and delaying the data rate 400 substantially equaling the best effort bitrate 50. The transient response depends on a rate adaptation algorithm of the distributed real-time application 4. During the transient response, the data rate 400 may temporarily exceed the best effort bitrate 50 or fall below the best effort bitrate 50.

As a result, a latency 55 of the wireless connection 20 is very small and constant, i.e., the distributed real-time application 4 reliably benefits from a very low jitter. Moreover, the distributed real-time application 4 fully uses the determined best effort bitrate 52 most of the time without substantially disadvantaging further simultaneous wireless connections provided by the access point 10.

Fig. 3 schematically shows a graph 7 displaying a time behavior of a data rate 400 and a change rate 401 of the data rate 400 of a wireless connection 20 controlled by the scheduler 100 shown in fig. 1 operated in a method according to an embodiment of the invention in a presence of a data burst 41. An abscissa 70 of the graph 7 indicates a time in seconds. An ordinate 71 of the graph 7 indicates values of the relevant rates in Megabits per second, Mbps, the latency 55 of the wireless connection 20 in ms and the change rate 401 in Megabits per squared second of the data rate 400, respectively.

The scheduler 100 continuously measures a current data rate 400 of the transmitted data packets 40 and determines a current change rate 401 of the measured current data rate 400.

The scheduler 100 switches from the normal mode 80 to a burst mode 81 of the scheduler 100 when the scheduler 100, in the normal mode 80, derives a start of a data burst 41 of the transmitted data packets 40 from the determined current change rate 401, and, in the burst mode 81, the scheduler 100 determines the target bitrate 52 ignoring the best effort bitrate 50. The scheduler 100 may derive the start of the data burst 41 when the determined current change rate 401 exceeds a predetermined positive high threshold rate 72. The scheduler 100, in the burst mode 81, may constantly signal the target bitrate 52 determined latest before switching to the burst mode 81.

Preferably, the scheduler 100 switches from the burst mode 81 to the normal mode 80 when the scheduler 100, in the burst mode 81, derives an end of the data burst 41 from the measured current data rate 400. The scheduler 100 may derive the end of the data burst 41 when a measured burst duration is shorter than a determined burst duration threshold and the determined current change rate 401 falls below a predetermined negative low threshold rate 75 or when a measured burst duration at least equals a determined burst duration threshold.

Favorably, the scheduler 100 determines the burst duration threshold to be a small integer multiple of an averaged burst duration of historic burst modes 81. The scheduler 100 may measure the burst duration by starting a timer when the scheduler 100 switches to the burst mode 81 and, in the burst mode 81, continuously evaluating the timer and stopping the timer when the scheduler 100 switches to the normal mode 80.

The scheduler 100, in the normal mode 80, may switch to a stability state 800 of the normal mode 80 when the determined current change rate 401 exceeds a predetermined negative high threshold rate 74 or falls below a predetermined positive low threshold rate 73.

The scheduler 100 may switch to a growth state 801 of the normal mode 80 when, in the normal mode 80, the determined current change rate 401 exceeds the predetermined positive low threshold rate 73 or when, in the burst mode 81, a measured burst duration at least equals a determined burst duration threshold.

The scheduler 100 may switch to a decay state 802 of the normal mode 80 when, in the normal mode 80, the determined current change rate 401 decreases below a predetermined negative high threshold or when, in the burst mode 81, a measured burst duration is shorter than a determined burst duration threshold and the measured data rate 400 falls below the best effort bitrate 50.

After the data burst 41, the scheduler 100 advantageously switches to a compensation mode 82 of the scheduler 100, and, in the compensation mode 82, determines the target bitrate 52 lower than in the normal mode 80. In the compensation mode 82, the scheduler 100 advantageously switches to the normal mode 80 when a measured amount of data forwarded to a lesser extent during the compensation mode 82 compensates an amount of data forwarded excessively during the burst mode 81.

As a result, the data burst 41 does not cause a reduction of the data rate 400. Thus, a time behavior of the data rate 400 is prevented from having a saw tooth shape due to data bursts 41. A temporary unfair distribution of spectral resources of the access node 100 may be retroactively compensated.

**Reference numerals**

| | |
|---|---|
| 1 | radio access network |
| 10 | access point |
| 100 | scheduler |
| 101 | antenna |
| 11 | edge data center |
| 12 | backbone |
| 2 | terminal device |
| 20 | wireless connection |
| 3 | internet |
| 4 | distributed real-time application |
| 40 | data packet |
| 400 | data rate |
| 401 | change rate |
| 41 | data burst |
| 5 | offset |
| 50 | best effort bitrate |
| 51 | priority bitrate |
| 52 | target bitrate |
| 53 | headroom |
| 54 | virtual priority gain |
| 55 | latency |
| 6 | graph |
| 60 | abscissa |
| 61 | ordinate |
| 7 | graph |
| 70 | abscissa |
| 71 | ordinate |
| 72 | positive high threshold rate |
| 73 | positive low threshold rate |
| 74 | negative high threshold rate |
| 75 | negative low threshold rate |
| 80 | normal mode |
| 800 | stability state |
| 801 | growth state |
| 802 | decay state |
| 81 | burst mode |
| 82 | compensation mode |

**Claims**

1.  A method for operating a scheduler (100) of an access point (10) of a radio access network, RAN, (1), wherein

    - an access point (10) of a RAN (1) forwards data packets (40) transmitted by a real-time application (4) via a wireless connection (20) provided by the access point (10);
    - a scheduler (100) of the access point (10), in a normal mode (80) of the scheduler (100), continuously determines a current best effort bitrate (50) for the wireless connection (20) and a target bitrate (52) for the distributed real-time application (4) dependent on the best effort bitrate (50), the best effort bitrate (50) being based on a fair allocation of spectral resources of the access point (10) and on radio conditions of the wireless connection (20), and signals the determined target bitrate (52) to the distributed real-time application (4);
    - the distributed real-time application (4) dynamically adjusts a data rate (400) of the transmitted data packets (40) dependent on the signaled target bitrate (52);
    - the scheduler (100) continuously measures a current data rate (400) of the transmitted data packets (40) and determines a current change rate (401) of the measured current data rate (400);
    - the scheduler (100) switches from the normal mode (80) to a burst mode (81) of the scheduler (100) when the scheduler (100), in the normal mode (80), derives a start of a data burst (41) of the transmitted data packets (40) from the determined current change rate (401), and, in the burst mode (81), the scheduler (100) determines the target bitrate (52) ignoring the best effort bitrate (50).

2.  The method according to claim 1, wherein the scheduler (100) derives the start of the data burst (41) when the determined current change rate (401) exceeds a predetermined positive high threshold rate (72).

3.  The method according to claim 1 or 2, wherein the scheduler (100), in the burst mode (81), constantly signals the target bitrate (52) determined latest before switching to the burst mode (81).

4.  The method according to one of claims 1 to 3, wherein the scheduler (100) switches from the burst mode (81) to the normal mode (80) when the scheduler (100), in the burst mode (81), derives an end of the data burst (41) from the measured current data rate (400).

5.  The method according to claim 4, wherein the scheduler (100) derives the end of the data burst (41) when a measured burst duration is shorter than a determined burst duration threshold and the determined current change rate (401) falls below a predetermined negative low threshold rate (75) or when a measured burst duration at least equals a determined burst duration threshold.

6.  The method according to claim 5, wherein the scheduler (100) determines the burst duration threshold to be a small integer multiple of an averaged burst duration of historic burst modes (81) and/or wherein the scheduler (100) measures the burst duration by starting a timer when the scheduler (100) switches to the burst mode (81) and, in the burst mode (81), continuously evaluating the timer and stopping the timer when the scheduler (100) switches to the normal mode (80).

7.  The method according to one of claims 1 to 6, wherein the scheduler (100), in the normal mode (80), switches to a stability state (800) of the normal mode (80) when the determined current change rate (401) exceeds a predetermined negative high threshold rate (74) or falls below a predetermined positive low threshold rate (73).

8.  The method according to one of claims 1 to 7, wherein the scheduler (100) switches to a growth state (801) of the normal mode (80) when, in the normal mode (80), the determined current change rate (401) exceeds the predetermined positive low threshold rate (73) or when, in the burst mode (81), a measured burst duration at least equals a determined burst duration threshold.

9.  The method according to one of claims 1 to 8, wherein the scheduler (100) switches to a decay state (802) of the normal mode (80) when, in the normal mode (80), the determined current change rate (401) decreases below a predetermined negative high threshold or when, in the burst mode (81), a measured burst duration is shorter than a determined burst duration threshold and the measured data rate (400) falls below the best effort bitrate (50).

10. The method according to one of claims 1 to 9, wherein the scheduler (100), after the data burst (41), switches to a compensation mode (82) of the scheduler (100), and, in the compensation mode (82), determines the target bitrate (52) lower than in the normal mode (80) and, in the compensation mode (82), switches to the normal mode (80) when a measured amount of data forwarded to a lesser extent during the compensation mode (82) compensates an amount of data forwarded excessively during the burst mode (81).

11. The method according to one of claims 1 to 10, wherein the scheduler (100) determines the target bitrate (52) as an output bitrate of a virtual queue defined by the scheduler (100), and the distributed real-time application (4) adjusts the data rate 400 of the transmitted data packets 40 below the signaled target bitrate (52).

12. The method according to claim 11, wherein the scheduler (100) determines the target bitrate (52) at an offset (5) above the best effort bitrate (50), measures a time average of a deviation of the adjusted data rate (400) from the determined best effort bitrate (50) and dynamically adjusts the offset (5) dependent on the measured time-averaged deviation gradually reducing the measured time-averaged deviation at least substantially to zero.

13. The method according to one of claims 11 or 12, wherein the scheduler (100) assigns a priority to the transmitted data packets (40), allocates spectral resources to the wireless connection (20) corresponding to the assigned priority and determines a priority bitrate (51) dependent on the allocated spectral resources and on radio conditions of the wireless connection (20) and an initial offset (5) when the distributed real-time application (4) starts, the initial offset (5) being calculated as a percentage of an excess of the determined priority bitrate (51) over the determined best effort bitrate (50) to result in an initially negative time-averaged deviation.

14. An access point for a radio access network, RAN, (1), comprising a computing device configured for carrying out a method according to one of claims 1 to 13 as the scheduler (100).

15. A computer program product, comprising a digital storage medium storing a program code, the program code causing a computing device to carry out a method according to one of claims 1 to 13 as the scheduler (100) when being executed by a processor of the computing device.

1

3G
4G

20

2

101

100

10

11

12

12

3

4

40

4

Fig. 1

6

61

51

54

53

400

52

5

50

55

60

Fig. 2

Fig. 3

Europäisches
Patentamt

European
Patent Office

Office européen
des brevets

## EUROPEAN SEARCH REPORT

**Application Number**

EP 24 20 1974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 066 729 B1 (ERICSSON TELEFON AB L M [SE]) 29 June 2005 (2005-06-29) * paragraphs [0001], [0010], [0032], [0043], [0051], [0058] - [0065]; figures 1, 7 * ----- | 1-15 | INV. H04L47/10 H04L47/2416 |

TECHNICAL FIELDS
SEARCHED      (IPC)

H04L

The present search report has been drawn up for all claims

| Place of search | Date of completion of the search | Examiner |
|---|---|---|
| The Hague | 24 February 2025 | Cicalese, Danilo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 1974

24-02-2025

| Patent document cited in search report | | Publication date | Patent family member(s) | | Publication date |
|---|---|---|---|---|---|
| EP 1066729 | B1 | 29-06-2005 | AU | 756958 B2 | 30-01-2003 |
| | | | CA | 2326750 A1 | 14-10-1999 |
| | | | CN | 1304619 A | 18-07-2001 |
| | | | DE | 69925990 T2 | 11-05-2006 |
| | | | EP | 1066729 A1 | 10-01-2001 |
| | | | JP | 4354641 B2 | 28-10-2009 |
| | | | JP | 2002511672 A | 16-04-2002 |
| | | | KR | 20010042426 A | 25-05-2001 |
| | | | US | 6374112 B1 | 16-04-2002 |
| | | | WO | 9952307 A1 | 14-10-1999 |